# EUROPÄISCHE PATENTSCHRIFT

(11) **EP 0 622 719 B1**
(45) Veröffentlichungstag und Bekanntmachung des Hinweises auf die Patenterteilung: **14.11.2001**
(21) Anmeldenummer: 94105559.2
(22) Anmeldetag: 11.04.1994
(51) Int. Cl.: G06F 1/00

(54) **Schutzvorrichtung für Schaltungsteile und/oder Daten eines elektrotechnischen Geräts**
Protecting device for circuit components and/or data in an electrotechnical apparatus
Dispositif de protection pour des éléments de circuit et/ou des données dans un appareil électrotechnique

(30) Priorität: 28.04.1993 DE 4313965
(43) Veröffentlichungstag der Anmeldung: 02.11.1994
(73) Patentinhaber: Fujitsu Siemens Computers GmbH, 81739 München (DE)
(72) Erfinder: Erdmenger, Stefan, Dipl.-Ing. (FH), D-86179 Augsburg (DE)
(74) Vertreter: Epping, Wilhelm, Dipl.-Ing.

(56) Entgegenhaltungen:
- EP-A- 0 268 142
- EP-A- 0 495 645
- EP-A- 0 514 708
- WO-A-86/03861
- US-A- 5 072 331
- IBM TECHNICAL DISCLOSURE BULLETIN., Bd.33, Nr.9, Februar 1991, NEW YORK US Seiten 444 - 445 'Security enclosure with elastomeric contact stripes'

## Beschreibung

Die Erfindung betrifft eine Schutzvorrichtung für Schaltungsteile und/oder Daten in einem elektrotechnischen Gerät. Zu schützende Schaltungsteile und/oder Daten sind in Geräten oder Bauelementen vorhanden, die beispielsweise im militärischen Bereich, im Bankwesen und ganz allgemein im Bereich der elektrischen oder optischen Übertragung von personenbezogenen oder sonstigen zu schützenden Daten eingesetzt werden. Häufig sind in solchen Geräten oder Bauelementen Chiffrierschlüssel gespeichert oder Verschlüsselungsalgorithmen durch Schaltungsanordnungen realisiert.

Neben der Möglichkeit, zum Schutz der sicherheitsrelevanten Gerätebestandteile, die entsprechenden Geräte nur unter Aufsicht von Sicherheitspersonal zu verwenden und die Geräte bei Nichtbenutzung beispielsweise in einem Tresor wegzuschließen, sind andere Schutzmechanismen bekannt. Beispielsweise ist aus einem Prospekt der Firma GAO mbH mit dem Titel "EFT-POS-Terminal" bekannt, die sicherheitsrelevanten Bestandteile eines Gerätes mit einer Vergußmasse zu überdecken, das Gerät vollständig mit einem Gehäuse zu umschließen und durch einen Lichtsensor sicherzustellen, daß die Chiffrierschlüssel bei Einfall von Licht in das Gehäuse gelöscht werden.

Eine weitere Möglichkeit besteht durch Verwendung einer Schutzfolie, wie sie beispielsweise aus DE-C-41 15 703 bekannt ist. Dabei wird ein Gerät, das zu schützende Schaltungsteile enthält, von einer flexiblen Platte, die mindestens zwei Leiterlagen aufweist, vollständig umhüllt. In den Leiterlagen sind Leiterbahnen mäanderförmig geführt. Die Leiterbahnen sind mit einer Auswerteschaltung verbunden, die bei einer physikalischen Beeinträchtigung der Leiterbahnen eine Zerstörung oder Veränderung sicherheitsrelevanter Schaltungsteile und/oder Daten im Gerät bewirkt.

Die letztgenannte Art, Schaltungsteile und/oder Daten quasi durch Verpacken in einer Folie mit darauf aufgebrachten mäanderförmigen Leiterbahnen zu schützen, stellt hohe Anforderungen an die Geometrie der Folie und an den Einbauplatz im Gehäuse, sowie an das Gehäuse selbst. Die Geometrie der Folie muß beispielsweise der Gehäuseform speziell angepaßt werden. Die Gehäuseform wiederum muß so ausgestaltet sein, daß durch die spezielle Ausgestaltung ein Eindringen in das Innere der Folie insbesondere im Folienverbindungsbereich ausgeschlossen wird. Entsprechend muß, wenn sich im Gehäuse nicht nur die sicherheitsrelevanten Bestandteile befinden, der Einbauplatz im Gehäuse ebenso ausgestaltet sein, daß kein Eindringen in die Folie möglich ist.

Aus IBM Technical Disclosure Bulletin, Vol.33, Nr.9, Februar 1991, Seiten 444 und 445, ist ein Sicherheitsgehäuse bestehend aus drei Leiterplatten und elastischen Kontaktstreifen bekannt. Eine der drei Leiterplatten ist zwischen den beiden anderen sandwichartig eingebettet und trägt die zu schützenden Schaltungsteile und/oder Daten. Die außenliegenden Leiterplatten weisen ein Leiterbahnengitter auf, das die sicherheitsrelevanten Teile nach außen abschirmt. An den Rändern der Leiterbahnengitter sind Kontaktflächen vorgesehen, die jeweils mit einem Ende einer Leiterbahn eines der Leiterbahnengitter verbunden sind. Diesen Kontaktflächen liegen auf der eingebetteten Leiterplatte angeordnete Kontaktflächen gegenüber. Zwischen die sich gegenüberliegenden Kontaktflächen sind elastische Kontaktstreifen eingebracht, die diese Kontaktflächen miteinander verbinden. Um die mechanische Stabilität der Schutzvorrichtung zu erhöhen und die ortsrichtige Lage der Kontaktstreifen zu gewährleisten, sind die Kontaktstreifen in Rahmen eingebettet. Zur Herstellung des elektrischen Kontakts und zur Erzielung einer mechanischen Stabilität sind die Leiterplatten an den Eckpunkten miteinander verschraubt.

Der Erfindung liegt die Aufgabe zugrunde, eine Schutzvorrichtung für Schaltungsteile und/oder Daten in einem elektrotechnischen Gerät aufzuzeigen, deren Schutzfunktion unabhängig von einem die Schutzvorrichtung umgebenden Gehäuse und der Gestaltung eines Einbauplatzes der Schutzvorrichtung im Gehäuse gewährleistet ist. Ferner soll die Schutzvorrichtung auf einfache Weise montierbar, mechanisch stabil und in einem hohen Maß funktionssicher sein.

Diese Aufgabe wird erfindungsgemäß durch die in Anspruch 1 angegebenen Merkmale gelöst. Ausgestaltungen und Weiterbildungen der Erfindung sind in Unteransprüchen angegeben.

Die zu schützenden Schaltungsteile werden zwischen zwei Platten angeordnet. Platten haben beispielsweise eine rechteckige Form und sind flächig ausgebildet. Die Platten überdecken sich zumindest teilweise und sind in diesem Überdeckungsbereich so voneinander beabstandet, daß die zu schützenden Schaltungsteile dazwischen Platz finden.

Die zu schützenden Schaltungsteile sind umrahmt von Kontaktbereichen, die auf den einander zugewandten Plattenflächen angeordnet sind. Einem Kontaktbereich auf einer Platte liegt dabei ein Kontaktbereich auf der anderen Platte gegenüber. Diese gegenüberliegenden Kontaktbereiche bilden jeweils ein Kontaktbereichspaar. Zwischen die Platten ist im Bereich der Kontaktbereiche Plattenmaterial eingefügt, in dem Durchkontaktierungen vorgesehen sind, deren Enden mit auf dem Plattenmaterial befindlichen Kontaktfächen verbunden sind, die jeweils einem Kontaktbereich eines Kontaktbereichspaars gegenüberliegen.

Zwischen Kontaktbereich und Kontaktfläche ist jeweils ein verflüssigbares Kontaktmittel einbringbar. Als verflüssigbares Kontaktmittel eignen sich beispielsweise Leitkleber und Lot. Diese Kontaktmittel gewährleisten eine sichere elektrische Verbindung zwischen Kontaktbereich und Kontaktfläche und damit eine sichere elektrische Verbindung jedes Kontaktbereichspaares. Mit Hilfe jedes Kontaktbereichspaars und dem eingefügten Plattenmaterial ist somit eine sichere leitende Verbindung zwischen den Platten herstellbar. Die Kontaktbereichspaare sind jeweils gegenüber anderen Kontaktbereichspaaren isoliert.

Durch die verflüssigbaren Kontaktmittel werden außerdem die beiden Platten mechanisch so miteinander verbunden, daß sie ohne zusätzliche mechanische Mittel, wie beispielsweise Schraubverbindungen, mechanisch stabil miteinander verbunden sind. Die Platten bilden ein kompaktes, geschlossenes Modul, das unabhängig von einem die Schutzvorrichtung umgebenden Gehäuse und der Gestaltung des Einbauplatzes der Schutzvorrichtung im Gehäuse die gewünschte Schutzfunktion gewährleistet. Die Baugröße des Moduls kann aufgrund der mechanischen Verbindung durch das Kontaktmittel auf die Größe eines integrierten Bausteins (beispielsweise 25 mm²) verkleinert werden.

Auf den die einander zugewandten Plattenflächen nach außen abschirmenden Plattenflächen sind Leiterbahnen aufgebracht, die jeweils quer über die Plattenfläche verlaufen und an ihren Endpunkten mit jeweils einem Kontaktbereich verbunden sind. Die Auswahl, welcher Kontaktbereich durch eine Leiterbahn mit welchem anderen Kontaktbereich verbunden ist, ist so zu treffen, daß jede Leiterbahn einer Platte mit mindestens einer Leiterbahn der anderen Platte in Serie geschaltet ist. Die beiden in Serie geschalteten Leiterbahnen bilden dann einen geschlossenen Ring um die zu schützenden Schaltungsteile. Sind mehr als zwei Leiterbahnen in Serie geschaltet, dann sind im Extremfall die zu schützenden Schaltungsteile von einer einzigen sich aus der Gesamtheit der Leiterbahnen zusammensetzenden Leiterbahn umwickelt. Es können aber auch mehrere Gruppen von in Serie geschalteten Leiterbahnen parallel zueinander geschaltet sein. In diesem Fall sind die zu schützenden Schaltungsteile durch eine Serienparallelschaltung von Leiterbahnen umgeben. Die Serienparallelschaltung ist ebenso wie die Serienschaltung mit einer Auswerteschaltung verbunden, die die Serienschaltungen einzeln oder gemeinsam auf eine eventuelle physikalische Beeinträchtigung hin überwacht. Die Auswerteschaltung ist Teil der zu schützenden Schaltungsteile.

Die Abstände der Leiterbahnen zueinander und die Breiten der Leiterbahnen sind so aufeinander abgestimmt, daß ein Versuch, zwischen den Leiterbahnen hindurch zu den zu schützenden Schaltungsteilen vorzudringen, zu einer physikalischen Beeinträchtigung mindestens einer Leiterbahn führen würde. Breite und Abstand der Leiterbahnen betragen beispielsweise jeweils 0,15 mm. Jede physikalische Beeinträchtigung einer Leiterbahn, die als Sensor dient und mit der Auswerteschaltung verbunden ist, hat eine Zerstörung oder Veränderung der sicherheitsrelevanten Schaltungsteile und/oder Daten durch die Auswerteschaltung zur Folge.

Gemäß einer Ausgestaltung und Weiterbildung der Erfindung sind im zwischen die Kontaktbereiche eingefügten Plattenmaterial quer zu den Durchkontaktierungen verlaufende, von den zu schützenden Schaltungsteilen nach außen reichende Leiterbahnen vorgesehen, mittels derer die zu schützenden Schaltungsteile mit der Peripherie verbindbar sind. Dadurch ist einfache Kontaktierung der zu schützenden Schaltungsteile mit der Umwelt gewährleistet. Diese Kontaktierung kann beispielsweise durch Bonden oder durch mit den Leiterbahnen verbundene Lötfahnen erfolgen.

Spezielle Ausgestaltungen und Weiterbildungen der Erfindung sind in weiteren Unteransprüchen angegeben. Im folgenden wird ein Ausführungsbeispiel der Erfindung anhand der Zeichnung näher erläutert. Dabei zeigen:
- Fig 1: eine Schutzvorrichtung für Schaltungsteile in Schnittdarstellung,
- Fig 2: ein Plattenmaterial mit Durchbruch, das zwischen zwei Platten einlegbar ist, in Draufsicht,
- Fig 3: eine Innenseite einer Platte mit zu schützenden Schaltungsteilen in Draufsicht und
- Fig 4: eine aufgebrochene Außenansicht der Platte gemäß Figur 3 mit Leiterbahnen.

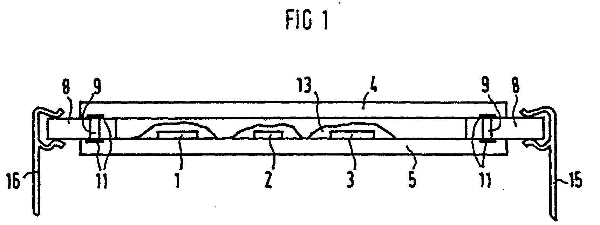

Gemäß Figur 1 besteht eine Schutzvorrichtung für Schaltungsteile aus zu schützenden Schaltungsteilen 1, 2 und einer Auswerteschaltung 3, die auf einer Platte 5 befestigt und beispielsweise durch Bonden kontaktiert und mit einer Vergußmasse 13 überdeckt sind. Die Bestückungsebene der Platte 5 ist quadratisch. Über die Ränder der Platte 5 ist ein rahmenförmiges Plattenmaterial 8 gelegt, das im Bereich der zu schützenden Bauelemente 1, 2 und der Auswerteschaltung 3 eine quadratische Aussparung 14 aufweist. Die Dicke des Plattenmaterials 8 ist größer, als die Höhe der mit der Vergußmasse 13 überdeckten Schaltungsteile 1, 2, 3. Die quadratische Aussparung 14 des Plattenmaterials 8 wird auf der der ersten Platte 5 gegenüberliegenden Seite von einer zweiten Platte 4, die ebenso groß wie die erste Platte 5 ist, abgedeckt.

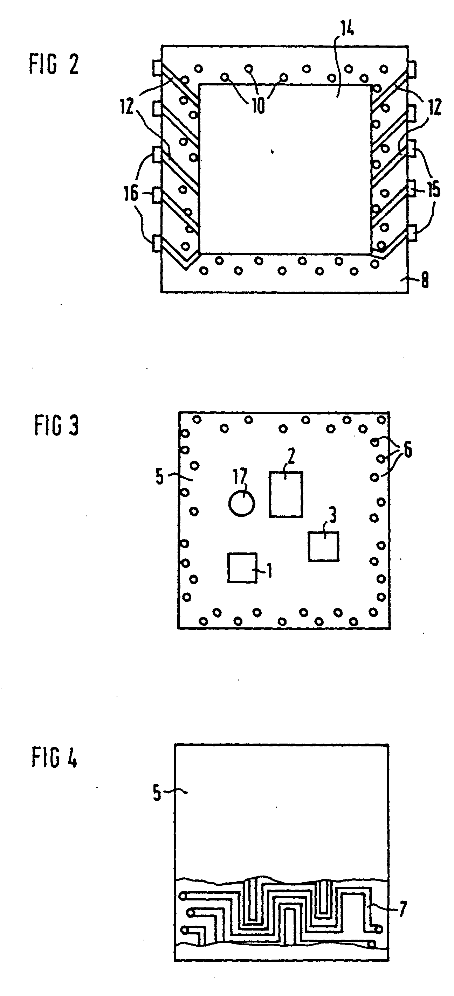

Im Überdeckungsbereich der Platten 4, 5 mit dem Plattenmaterial 8 sind im Plattenmaterial 8 Durchkontaktierungen 9 vorgesehen. Diese Durchkontaktierungen 9 sind in zwei Reihen versetzt zueinander so angeordnet, daß sie zwei Ringe um die zu schützenden Schaltungsteile 1, 2, 3 bilden. Die Durchkontaktierungen 9 sind jeweils an beiden Enden mit auf der Oberfläche des Plattenmaterials 8 eingebrachten Kontaktflächen 10 (siehe Figur 2) verbunden. Diesen Kontaktflächen 10 liegen jeweils auf den einander zugewandten Seiten der Platten 4,5 eingebrachte Kontaktbereiche 6 (siehe Figur 3) gegenüber.

Zwischen die Kontaktflächen 10 und die Kontaktbereiche 6 ist ein verflüssigbares Kontaktmittel 11 eingebracht. Dieses Kontaktmittel 11 ist ein Lot, das nach dem Zusammenfügen der Platten 4, 5 und des Plattenmaterials 8 erhitzt wird, sich dabei verflüssigt und die einander zugeordneten Kontaktbereiche 6 und Kontaktflächen 10 elektrisch verbindet. Durch die Vielzahl der Kontaktflächen 10 und Kontaktbereiche 6 wird durch das Lot 11 auch eine mechanisch feste Verbindung der Platten 4, 5 und des Plattenmaterials 8 erreicht.

Wie in Figur 2 gezeigt, verlaufen zwischen den Durchkontaktierungen 9 im Plattenmaterial 8 einzelne Leiterbahnen 12 vom Durchbruch 14 nach außen. Am äußeren Rand des Plattenmaterials 8, der über die Platten 4, 5 hinausragt, sind die Leiterbahnen 12 an die Oberfläche des Plattenmaterials 8 geführt, so daß sie mit über das Plattenmaterial 8 schiebbaren oder auf sonstige Art aufbringbaren Lötfahnen 15, 16 kontaktierbar sind. Die Längsausdehnung der Lötfahnen 15, 16 ist senkrecht zu den Plattenebenen gerichtet. Die Lötfahnen 15, 16 stehen so weit über die Platte 5 hervor, daß die Schutzvorrichtung als integrierter Baustein betrachtet und entsprechend auf einer Leiterplatte kontaktiert und montiert werden kann. Über die Lötfahnen 15, 16 und die Leiterbahnen 12 werden die zu schützenden Bauelemente 1, 2, 3 mit der Außenwelt verbunden.

Die Platten 4, 5 und das Plattenmaterial 8 sind mehrlagig ausgebildet und aus einer Vielzahl von keramischen Schichten aufgebaut. Dies ermöglicht zum einen einen sehr kleinen Aufbau der Schutzvorrichtung und zum anderen eine verdeckte Leitungsführung. Während auf der Innenseite der Schutzvorrichtung auf der Platte 5 - wie oben beschrieben- die zu schützenden Schaltungsteile 1, 2, die Auswerteschaltung 3 und ein Energiespeicher 17 angeordnet sind, sind auf den Außenflächen der Platten 4, 5 keine Bauelemente oder Leiterbahnen vorgesehen. Die Leiterbahnen zur Verbindung der zu schützenden Schaltungsteile 1, 2, der Auswerteschaltung 3 und des Energiespeichers 17 und die Leiterbahnen 12 zur Verbindung mit der Außenwelt, sind in den inneren Schichten der Platten 4, 5 und des plattenartigen Materials 8 in mehreren Lagen geführt.

Die nach außen durch eine Keramikschicht abgedeckte äußerste Leiterlage der Platten 4, 5 weist, wie in Figur 4 gezeigt, Leiterbahnen 7 auf. Diese Leiterbahnen 7 sind quer über die Fläche der Platten 4, 5 mäanderförmig geführt und jedes Ende einer Leiterbahn 7 ist mit einem Kontaktbereich 6 verbunden. Die Leiterbahnen 7 haben beispielsweise eine Breite von 0,15 mm und einen Abstand zueinander von ebenfalls 0,15 mm. Sie sind mäanderförmig parallel zueinander so über die genannte Plattenschicht geführt, daß sie die gesamte Fläche der jeweiligen Platte 4, 5 bedecken.

Die Vielzahl der Leiterbahnen 7 auf der ersten Platte 5 ist über die Kontaktbereiche 6, das Lot 11, die Kontaktflächen 10 und die Durchkontaktierungen 9 mit der Vielzahl der Leiterbahnen 7 auf der zweiten Platte 4 elektrisch verbunden. Die Auswahl, welcher Endpunkt einer Leiterbahn 7 mit welchem Kontaktbereich 6 zu verbinden ist, ist so getroffen, daß jede Leiterbahn 7 Bestandteil einer Serienschaltung aller Leiterbahnen 7 auf den Platten 4, 5 ist. Die beiden Endpunkte der Serienschaltung bilden zwei der Kontaktbereiche 6. Von diesen Kontaktbereichen 6 führen Leitungspfade zur Auswerteschaltung 3. Diese Auswerteschaltung 3 erkennt eine physikalische Beeinträchtigung, beispielsweise durch Wärmeeinwirkung oder mechanische Einwirkung der Leiterbahnserienschaltung und zerstört beim Auftreten einer physikalischen Beeinträchtigung die zu schützenden Schaltungsteile 1, 2 und/oder die in den Schaltungsteilen 1, 2 enthaltenen sicherheitsrelevanten Daten.

Der Energiespeicher 17, beispielsweise ein Kondensator, sorgt dafür, daß die Auswerteschaltung 3 auch bei Wegfall der von außen angelegten Versorgungsspannung funktionsfähig bleibt. Bei Wegnahme der Versorgungsspannung wird die Auswerteschaltung aktiviert und die Zerstörung der zu schützenden Schaltungsteile 1, 2 und/oder der in den Schaltungsteilen 1, 2 enthaltenen Daten ausgelöst.

Die zu schützenden Schaltungsteile 1, 2 sind somit von den beiden Platten 4, 5 und dem plattenartigen Material 8 vollständig umgeben und bilden mit diesem ein kompaktes Modul. Dieses Modul kann unabhängig von einem Gehäuse, und unabhängig von der Gestaltung eines Einbauplatzes der Schutzvorrichtung im Gehäuse gewährleistet werden. Das Modul kann als integrierter Baustein in komplexen Schaltungen eingesetzt werden.

### Bezugszeichenliste

- 1,2 =: zu schützende Schaltungsteile
- 3 =: Auswerteschaltung
- 4,5 =: Platten
- 6 =: Kontaktbereich
- 7 =: Leiterbahn
- 8 =: Plattenmaterial
- 9 =: Durchkontaktierung
- 10 =: Kontaktfläche
- 11 =: Kontaktmittel / Lot
- 12 =: Leiterbahn
- 13 =: Vergußmasse
- 14 =: Aussparung
- 15 =: Lötfahnen
- 16 =: Lötfahnen
- 17 =: Energiespeicher

## Patentansprüche

1. Schutzvorrichtung für Schaltungsteile (1,2) und/oder Daten eines elektrotechnischen Geräts, bei der
- die zu schützenden Schaltungsteile (1,2) zwischen zwei Platten (4,5) angeordnet sind,
- auf den einander zugewandten Flächen der zwei Platten (4,5) Kontaktbereiche (6) angeordnet sind, die mit Endpunkten von Leiterbahnen (7) verbunden sind, die jeweils quer über die zwei Platten (4,5) verlaufen, wobei diese Leiterbahnen (7) die einander zugewandten Flächen der zwei Platten (4,5) nach außen abschirmen,
- jeweils zwei einander gegenüberliegende, unterschiedlichen Platten (4,5) zugehörige Kontaktbereiche (6) je ein Kontaktbereichspaar bilden und mehrere Kontaktbereichspaare ringförmig um die zu schützenden Schaltungsteile (1,2) angeordnet sind;
- zwischen die Platten (4,5) im Bereich der Kontaktbereiche (6) Plattenmaterial (8) eingefügt ist,
- in dem Durchkontaktierungen (9) vorgesehen sind, deren Enden mit Kontaktflächen (10) verbunden sind, die jeweils einem Kontaktbereich (6) eines Kontaktbereichspaars gegenüberliegen und
- das im Bereich der zu schützenden Schaltungsteile (1,2) einen Durchbruch aufweist,
- zwischen Kontaktbereich (6) und Kontaktfläche (10) jeweils ein verflüssigbares Kontaktmittel (11) einbringbar ist, und
- die auf den Plattenflächen aufgebrachten Leiterbahnen (7) die Kontaktbereiche (6) so miteinander verbinden, daß jede Leiterbahn (7) einer Platte (4,5) mit mindestens einer Leiterbahn (7) der anderen Platte (4,5) in Serie geschaltet ist und mehrere in Serie geschaltete Leiterbahnen parallel verbunden sein können, und jede Serien- oder Serienparallelschaltung mit einer Auswerteschaltung (3) verbunden ist.

2. Schutzvorrichtung nach Anspruch 1, bei der die Kontaktbereiche (6) die zu schützenden Schaltungsteile (1,2) in mindestens zwei Ringen umgeben, wobei die unterschiedlichen Ringen zugeordneten Kontaktbereiche (6) versetzt zueinander angeordnet sind.

3. Schutzvorrichtung nach einem der Ansprüche 1 oder 2, bei der das eingefügte Plattenmaterial (8) aus einer mehrlagigen Platte besteht, deren Fläche so groß ist, daß sie die Flächen der Platten (4,5) zumindest einseitig überragt.

4. Schutzvorrichtung nach einem der Ansprüche 1 bis 3, bei der
- die Platten (4,5) mehrlagig ausgebildet sind und
- die Leiterbahnen (7) zueinander eng benachbart, in Mäanderform über die jeweilige Platte (4,5) verlaufen.

5. Schutzvorrichtung nach einem der Ansprüche 1 bis 4 bei der
- die zu schützenden Schaltungsteile (1,2) und die Auswerteschaltung (3) auf einer Bauteileseite wenigstens einer der Platten (4,5) angeordnet sind;
- die Bauteileseiten der Platten (4,5) einander zugewandt sind, und;
- die Leiterbahnen (7), deren Endpunkte mit jeweils einem Kontaktbereich (6) verbunden sind, in einer von Außen nicht sichtbaren Schicht der Platten (4,5) verlaufen.

6. Schutzvorrichtung nach einem der Ansprüche 1 bis 5, bei der mindestens eine der Platten (4,5) aus mehreren keramischen Schichten besteht.

7. Schutzvorrichtung nach einem der Ansprüche 1 bis 6, bei der im zwischen die Kontaktbereiche (6) eingefügten Plattenmaterial (8) quer zu den Durchkontaktierungen (9) verlaufende, von den zu schützenden Schaltungsteilen (1,2) nach Außen reichende Leiterbahnen (12) vorgesehen sind, mittels derer die zu schützenden Schaltungsteile (1,2) mit der Peripherie verbindbar sind.

## Claims

1. Protection device for circuit parts (1, 2) and/or data of an electrotechnical apparatus, in which
- the circuit parts (1, 2) to be protected are arranged between two plates (4, 5),
- contact regions (6) are arranged on the mutually facing areas of the two plates (4, 5), which contact regions are connected to end points of conductor tracks (7) which each run transversely over the two plates (4, 5), these conductor tracks (7) screening the mutually facing areas of the two plates (4, 5) from the outside,
- in each case two mutually opposite contact regions (6) associated with different plates (4, 5) respectively form a contact region pair and a plurality of contact region pairs are arranged annularly around the circuit parts (1, 2) to be protected;
- plate material (8) is inserted between the plates (4, 5) in the region of the contact regions (6),
- in which plate material plated-through holes (9) are provided, whose ends are connected to contact areas (10) which are in each case opposite a contact region (6) of a contact region pair, and
- which plate material has a perforation in the region of the circuit parts (1, 2) to be protected,
- a liquefiable contact means (11) can in each case be introduced between contact region (6) and contact area (10), and
- the conductor tracks (7) applied on the plate areas connect the contact regions (6) to one another in such a way that each conductor track (7) of one plate (4, 5) is connected in series with at least one conductor track (7) of the other plate (4, 5) and a plurality of series-connected conductor tracks can be connected in parallel, and each series or series/parallel circuit is connected to an evaluation circuit (3).

2. Protection device according to Claim 1, in which the contact regions (6) surround the circuit parts (1, 2) to be protected in at least two rings, the contact regions (6) assigned to different rings being arranged offset with respect to one another.

3. Protection device according to either of Claims 1 and 2, in which the inserted plate material, comprises a multilayer plate whose area is so large that it projects beyond the areas of the plates (4, 5) at least on one side.

4. Protection device according to one of Claims 1 to 3, in which
- the plates (4, 5) are of multilayer design, and
- the conductor tracks (7) run closely adjacent to one another, in a meandering form over the respective plate (4, 5).

5. Protection device according to one of Claims 1 to 4, in which
- the circuit parts (1, 2) to be protected and the evaluation circuit (3) are arranged on a component side of at least one of the plates (4, 5);
- the component sides of the plates (4, 5) face one another and;
- the conductor tracks (7) whose end points are connected to a respective contact region (6) run in a layer of the plates (4, 5) which is not visible from the outside.

6. Protection device according to one of Claims 1 to 5, in which at least one of the plates (4, 5) comprises a plurality of ceramic layers.

7. Protection device according to one of Claims 1 to 6, in which, in the plate material (8) inserted between the contact regions (6), conductor tracks (12) are provided which run transversely with respect to the plated-through holes (9) and extend from the circuit parts (1, 2) to be protected to the outside, by means of which conductor tracks the circuit parts (1, 2) to be protected can be connected to the periphery.

## Revendications

1. Dispositif de protection pour des éléments (1, 2) de circuit et/ou des données dans un appareil électrotechnique, suivant lequel
- les éléments (1, 2) de circuit à protéger sont disposés entre deux plaques (4, 5),
- des zones (6) de contact sont disposées sur les faces en vis-à-vis des deux plaques (4, 5), zones qui sont reliées aux points finaux de pistes (7) conductrices qui s'étendent respectivement transversalement sur les deux plaques (4, 5), ces pistes (7) conductrices protégeant vers l'extérieur les faces en vis-à-vis des deux plaques (4, 5),
- les zones (6) de contact respectivement associées à deux plaques (4, 5) différentes en vis-à-vis forment respectivement une paire de zones de contact, et plusieurs paires de zones de contact sont disposées annulairement autour des éléments (1, 2) de circuit à protéger ;
- du matériau (8) en plaque est inséré entre les plaques (4, 5) dans la région des zones (6) de contact,
- dans lequel sont prévus des trous (9) métallisés dont les extrémités sont reliées à des faces (10) de contact qui sont respectivement en vis-à-vis d'une zone (6) de contact d'une paire de zones de contact, et
- qui comporte un ajour dans la région des éléments (1, 2) de circuit à protéger,
- un agent (11) de contact liquéfiable peut être respectivement introduit entre la zone (6) de contact et la face (10) de contact, et
- les pistes (7) conductrices apposées sur les faces des plaques relient entre elles les zones (6) de contact de telle sorte que chaque piste (7) conductrice d'une plaque (4, 5) est montée en série avec au moins une piste (7) conductrice de l'autre plaque (4, 5) et plusieurs pistes conductrices montées en série peuvent être reliées en parallèle, et chaque montage en série ou série-parallèle est relié à un montage (3) d'interprétation.

2. Dispositif de protection suivant la revendication 1, suivant lequel les zones (6) de contact entourent les éléments (1, 2) de circuit en au moins deux anneaux, les zones (6) de contact associées à des anneaux différents étant disposées en décalage mutuel.

3. Dispositif de protection suivant la revendication 1 ou 2, suivant lequel le matériau (8) en plaque inséré est constitué d'une plaque à plusieurs couches dont la surface est suffisamment grande pour dépasser au moins d'un côté les faces des plaques (4, 5).

4. Dispositif de protection suivant l'une des revendications 1 à 3, suivant lequel
- les plaques (4, 5) sont réalisées à plusieurs couches, et
- les pistes (7) conductrices s'étendent en méandres, en voisinage étroit, sur la plaque (4, 5) respective.

5. Dispositif de protection suivant l'une des revendications 1 à 4, suivant lequel
- les éléments (1, 2) de circuit à protéger et le montage (3) d'interprétation sont disposés sur un côté composants d'au moins une des plaques (4, 5),
- les côtés composants des plaques (4, 5) sont disposés en vis-à-vis ; et
- les pistes (7) conductrices, dont les points terminaux sont reliés à une zone (6) de contact respective, s'étendent dans une couche des plaques (4, 5) qui n'est pas visible de l'extérieur.

6. Dispositif de protection suivant l'une des revendications 1 à 5, suivant lequel au moins une des plaques (4, 5) est constituée de plusieurs couches céramiques.

7. Dispositif de protection suivant l'une des revendications 1 à 6, suivant lequel des pistes (12) conductrices, qui s'étendent transversalement aux trous (9) métallisés, depuis les éléments (1, 2) de circuit à protéger vers l'extérieur, sont prévues dans le matériau (8) en plaque inséré entre les zones (6) de contact, pistes au moyen desquelles les éléments (1, 2) de circuit à protéger peuvent être reliés à la périphérie.
